# FASCICULE DE BREVET EUROPEEN

(11) **EP 1 943 456 B1**
(45) Date de publication et mention de la délivrance du brevet: **07.07.2010**
(21) Numéro de dépôt: 06820309.0
(22) Date de dépôt: 18.10.2006
(51) Int. Cl.: F17C 13/04, F16K 1/30

(54) **ORGANE DE CONTROLE DU REMPLISSAGE ET/OU DU SOUTIRAGE D'UN GAZ SOUS PRESSION, RESERVOIR ET CIRCUIT MUNIS D'UN TEL ORGANE**
ELEMENT ZUR STEUERUNG DER FÜLLUNG MIT UND/ODER ENTNAHME VON EINEM DRUCKGAS, TANK UND SCHALTUNG MIT EINEM SOLCHEN ELEMENT
ELEMENT FOR CONTROLLING FILLING AND/OR DRAWING OF A PRESSURIZED GAS, TANK AND CIRCUIT PROVIDED WITH SUCH AN ELEMENT

(30) Priorité: 27.10.2005 FR 0553261
(43) Date de publication de la demande: 16.07.2008
(73) Titulaire: L'AIR LIQUIDE, Société Anonyme pour l'Etude et l'Exploitation des Procédés Georges Claude, 75321 Paris Cedex 07 (FR)
(72) Inventeur: PISOT, Philippe, 95290 L'isle Adam (FR)
(74) Mandataire: De Cuenca, Emmanuel Jaime
(86) Numéro de dépôt international: PCT/FR2006/051053
(87) Numéro de publication internationale: WO 2007/048957

(56) Documents cités:
- EP-A- 1 316 755
- EP-A1- 0 467 769
- EP-A1- 0 668 468
- EP-A2- 1 367 316
- DE-A1- 4 334 182
- US-A1- 2004 144 803

## Description

La présente invention concerne un organe de contrôle du remplissage et/ou du soutirage d'un gaz sous pression ainsi qu'un réservoir et un circuit munis d'un tel organe. Un exemple est présenté dans le document DE 43 34 182.

Parmi les solutions connues de stockage sous forme gazeuse, les bouteilles équipées d'un robinet simple sont très favorables à l'exploitant et à l'industriel pour la gestion du parc. S'il est ouvert, le robinet simple met l'utilisateur directement en contact avec le fluide à sa pression de stockage. Il est donc nécessaire pour utiliser le gaz de connecter du matériel (détendeur, débitmètre, etc....) exigeant des outils et opérations fastidieuses. Ce type d'opération comporte des risques notamment lorsque l'utilisateur n'est pas professionnel. Cette solution n'est donc pas favorable à l'utilisateur final.

Plus favorable à l'utilisateur final est le robinet détendeur rapporté sur la bouteille délivrant le fluide à la pression nécessaire à l'application. Toutefois, l'exploitation de ce dernier implique à l'industriel d'importantes contraintes en terme notamment de gestion du parc, de maintenance, d'interface avec le matériel de remplissage.

Ainsi, aucune des solutions existantes précitées ne prend en compte simultanément les besoins spécifiques de l'industriel et du client.

Par ailleurs, dans le domaine notamment du stockage de gaz combustible utilisés comme source d'énergie et embarqués à bord de véhicules (comme par exemple l'hydrogène pour les véhicules à pile à combustible ou à moteur à combustion interne), les références normatives et réglementaires ou les règles de sécurité imposent la présence d'un organe de sécurité limiteur de pression (« Pressure Relief Valve » ou PRD) permettant, en cas d'incendie, l'évacuation totale du gaz contenu dans les réservoirs à l'atmosphère évitant ainsi leur éclatement.

Dans une configuration d'un réservoir fixe à bord d'un système utilisateur (par exemple un véhicule), les organes de sécurité sont définis et positionnés en conséquence à demeure sur celui-ci. Le problème est en revanche plus complexe pour les stockages de gaz destinés à être embarqués suivant le principe du « remplacement d'un réservoir vide par un réservoir plein ». En effet, dans le cas de récipients nomades, l'organe de sécurité doit suivre le récipient tout au long de son cycle de vie (hors et dans le système utilisateur).

La double vie de ces stockages de gaz (d'une part utilisés en tant que réservoirs embarqués et d'autre part transportés ou stockés sous pression durant les phases de logistique) nécessite que les organes de sécurités aient des comportements différents suivant la phase d'utilisation.

L'encombrement, la masse, la simplicité structurelle et d'utilisation de ces réservoirs ainsi que de leurs organes de contrôles sont des facteurs cruciaux pour leur utilisation à grande échelle dans un mode de fourniture de gaz du type « remplacement d'un réservoir vide par un réservoir plein ».

Les bouteilles classiques équipées d'un robinet simple ne disposent généralement pas de valve de sécurité ou limiteur du type PRD. Il est donc nécessaire pour utiliser le gaz de connecter la bouteille sur une installation embarquée disposant au moins d'un organe de sécurité de ce type. L'installation doit également comporter un détendeur. Ceci augmente les risques lors de l'utilisation, notamment lorsque l'utilisateur n'est pas professionnel (fuites, projection de pièces...).

L'invention vise ainsi à résoudre tout ou partie des problèmes précités, pour assurer, par exemple, un niveau de sécurité et d'efficacité dans le stockage et l'utilisation de gaz sous pression, satisfaisant tout ou partie des contraintes d'utilisation ci-dessus et autorisant les manipulations notamment par des non-spécialistes.

L'invention concerne ainsi un organe de contrôle du remplissage et/ou du soutirage d'un gaz sous pression destiné à être monté dans un orifice d'un réservoir tel que défini par la revendication 1.

Selon une particularité avantageuse, la seconde extrémité du circuit d'échappement de gaz coïncide avec l'orifice de l'organe de contrôle formant une entrée et/ou une sortie pour le gaz.

Par ailleurs, des modes de réalisation de l'invention peuvent comporter l'une ou plusieurs des caractéristiques suivantes :
- la seconde extrémité du circuit d'échappement de gaz coïncide avec un orifice d'entrée/sortie de l'organe de contrôle destiné aussi bien à l'entrée (remplissage) qu'à la sortie de gaz (soutirage),
- l'organe comporte une portion de détente abritant un dispositif de pré-détente, l'organe de contrôle comportant en outre une portion de montage destinée à être montée dans l'orifice d'un réservoir, la portion de détente et la portion de montage étant disposées relativement sur le corps de façon à disposer la portion de détente au moins partiellement à l'intérieur du volume d'un réservoir lorsque l'organe est en position montée,
- l'élément de sécurité et la portion de détente sont disposés respectivement sensiblement de part et d'autre de la portion de montage, de façon à disposer l'élément de sécurité au moins partiellement à l'extérieur d'un volume d'un réservoir lorsque l'organe est en position montée,
- le dispositif de sécurité comprend un élément d'obturation apte à être déplacé entre une position d'obturation et une position de non-obstruction du circuit d'échappement de gaz, l'élément de sécurité formant une butée escamotable de maintien de l'élément d'obturation en position d'obturation,
- l'organe comporte un canal ou circuit de remplissage pour le gaz sous pression s'étendant entre une première extrémité destinée à- être reliée à une source de gaz de remplissage sous pression et une seconde extrémité destinée à communiquer avec un réservoir, un dispositif à clapet de remplissage étant disposé sur le circuit de remplissage, le clapet de remplissage étant dimensionné pour s'ouvrir uniquement au-delà d'une pression seuil, pour autoriser la circulation de gaz sous pression entre les deux extrémités du circuit de remplissage uniquement dans le sens d'un remplissage et lorsque la pression du gaz de remplissage excède ledit seuil,
- le clapet de remplissage est mobile relativement à un siège solidaire d'un cadre, l'élément d'obturation du canal d'échappement comportant ledit cadre,
- les circuits de remplissage et d'échappement comportent au moins une portion commune,
- l'organe comporte un circuit de soutirage de gaz s'étendant entre une première extrémité destinée à être reliée en position montée avec t'intérieur du réservoir et une seconde extrémité destinée à être reliée à un circuit utilisateur du gaz soutiré du réservoir,
- l'organe comporte, disposé dans le circuit de soutirage et en plus d'un dispositif de pré-détente, au moins l'un des éléments de contrôle parmi: un élément filtrant le gaz, un dispositif formant clapet de pression résiduelle, une valve d'isolement,
- l'organe comporte, disposés en série dans le circuit de soutirage entre la première et la seconde extrémité : un élément filtrant le gaz, un dispositif formant clapet de pression résiduelle, le dispositif de pré-détente et une valve d'isolement,
- le circuit de soutirage est sensiblement rectiligne entre ses deux extrémités,
- l'organe comprend une soupape de décharge haute pression ayant une première extrémité destinée à être reliée avec le gaz sous pression en position montée et une seconde extrémité reliée à une sortie pour évacuer du fluide lorsque la pression excède une valeur déterminée supérieure à un seuil,
- l'élément de sécurité comprend l'un au moins des éléments de sécurité parmi : un fusible thermique, un disque de rupture, une soupape de décharge, une vanne commandée en fonction d'une pression et/ou d'une température mesurée,
- l'élément de sécurité du dispositif de sécurité (par exemple fusible thermique) comprend ou constitue la soupape de décharge haute pression,
- l'élément de sécurité comporte un ressort sollicitant l'élément d'obturation vers sa position d'obturation dont l'effort de tarage est supérieur à l'effort provoqué par la pression du fluide stocké dans des conditions normales d'utilisation (c'est-à-dire en dehors d'une situation à risque de surpression),
- la portion du circuit d'échappement située entre l'élément d'obturation et la première extrémité comprend un canal formé dans le corps de l'organe et apte à mettre en communication l'élément d'obturation directement avec le gaz sous pression dans le réservoir en position montée,
- en position montée, l'élément d'obturation est sollicité par le gaz sous pression vers sa position de non-obturation,
- les circuits d'échappement et de soutirage sont distincts et sensiblement parallèles sur au moins une partie de leur longueur,
- les circuits d'échappement et de soutirage ont une portion commune au moins au niveau de l'orifice d'entrée/sortie de l'organe,
- les circuits de remplissage et d'échappement sont communs, c'est-à-dire que le gaz emprunte sensiblement le même circuit en sens inverse lors de son remplissage et de son échappement de sécurité,
- l'organe de contrôle a une forme sensiblement oblongue et cylindrique,
- l'organe de contrôle comporte un dispositif de mesure d'une grandeur physique telle que la pression représentative d'une contenance, apte à être relié directement au gaz sous pression en position montée et apte à coopérer avec des moyens d'affichage de ladite grandeur physique situés sur l'organe de contrôle et/ou à distance,
- la portion de montage de l'organe de contrôle du remplissage est sensiblement cylindrique ou conique et comporte au moins un élément de fixation tel que des filets prévus pour coopérer avec une surface conjuguée tel qu'un taraudage d'un goulot de récipient,
- la portion de montage de l'organe de contrôle comporte un élément destiné à assurer l'étanchéité avec le récipient lors d'un serrage, tel qu'une couche de téflon®,
- la valve d'isolement est logée à l'intérieur du volume de l'organe de contrôle et comporte une extrémité accessible via un orifice d'entrée/sortie muni d'un obturateur escamotable, la valve d'isolement étant apte à être déplacée entre une position d'ouverture et une position de fermeture du circuit de soutirage sous l'action d'une extrémité conjuguée d'un appareil utilisateur introduit dans le corps de l'organe de contrôle via l'orifice d'entrée/sortie,
- le corps de l'organe de contrôle comprend une portion formant une interface de connexion pour un circuit ou un appareil utilisateur du gaz transitant via l'organe de contrôle, la portion formant une interface de connexion et la portion de détente étant disposée respectivement sensiblement de part et d'autre de la portion de montage, de façon à disposer la portion formant une interface de connexion au moins partiellement à l'extérieur du volume du réservoir lorsque l'organe est en position montée,
- l'invention peut concerner également un véhicule comprenant un organe de contrôle ou un ensemble organe de contrôle et récipient conforme à l'une quelconque des caractéristiques ci-dessus,
- le gaz est de l'hydrogène ou contient de l'hydrogène.

Un autre but de l'invention est de proposer un récipient de gaz sous pression comportant un orifice et un organe de contrôle du remplissage et/ou du soutirage conforme à l'une quelconque des caractéristiques ci-dessus.

Un autre but de l'invention est de proposer un circuit d'utilisation d'un gaz sous pression qui comporte un récipient raccordé au circuit d'utilisation via l'organe de contrôle, le circuit étant reliée à l'orifice d'entrée/sortie de l'organe de contrôle, le circuit comportant un mécanisme formant une soupape de sécurité haute pression apte à évacuer le gaz sous pression d'échappement vers l'atmosphère ou dans une zone sécurisée déterminée.

Selon d'autres particularités, le circuit comporte une conduite principale reliée à un utilisateur du gaz et une conduite auxiliaire de sécurité reliée à la conduite principale, le mécanisme formant une soupape de sécurité haute pression étant située dans la conduite principale et/ou dans la conduite auxiliaire.

D'autres particularités et avantages apparaîtront à la lecture de la description ci-après, faite en référence aux figures dans lesquelles :
- la figure 1 est une vue extérieure, en perspective isométrique, d'un exemple de réalisation selon l'invention d'un ensemble de stockage de gaz pourvu d'un organe de contrôle du remplissage et/ou du soutirage d'un gaz sous pression,
- la figure 2 est une vue extérieure, en perspective isométrique, de l'organe de contrôle de la figure 1,
- la figure 3 est une vue en coupe longitudinale à plus grande échelle d'un détail de l'ensemble de stockage de gaz et de l'organe de contrôle de la figure 1,
- la figure 4 est une vue en coupe longitudinale d'une interface de connexion de l'organe de contrôle des figures 1 à 3, dans une position connectée à une prise de conditionnement,
- la figure 5 est une vue partielle et en coupe longitudinale de l'organe de contrôle de la figure 2, selon un plan passant par l'axe d'un dispositif d'échappement de gaz de sécurité porté par l'organe de contrôle, le dispositif de sécurité étant en position inactiver,
- la figure 6 est une vue en coupe longitudinale de l'interface de connexion de l'organe de contrôle en position connecté à un raccord de sortie,
- la figure 7 est une vue en coupe longitudinale du dispositif de sécurité de la figure 5 en position active après une surchauffe,
- la figure 8 est une vue agrandie d'un détail de la figure 3,
- la figure 9 est une vue de l'organe de contrôle de la figure 2, en coupe selon un plan identique au plan de coupe de la figure 5.

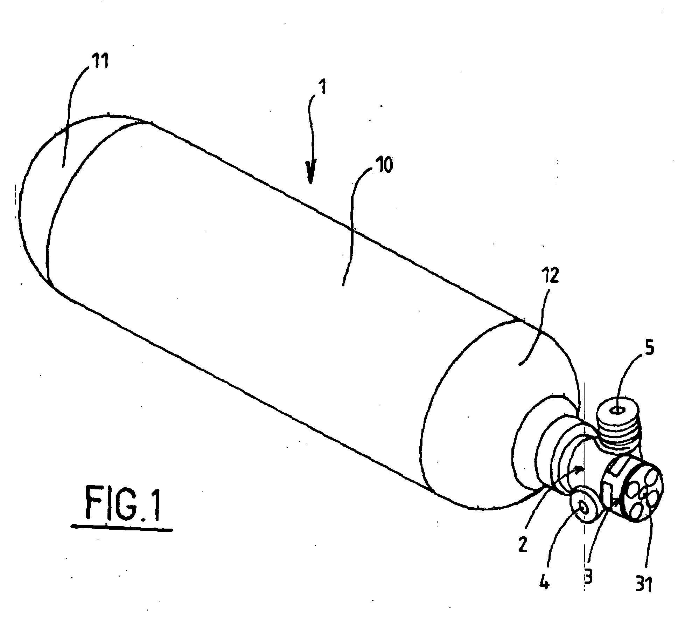

Dans le mode de réalisation non limitatif de la figure 1, on reconnaît un corps de réservoir 1 de gaz oblong présentant une partie centrale principale cylindrique 10 et deux extrémités 11 et 12 en forme de dôme. Le réservoir 1 est préférablement réalisé en matériaux composites, par exemple un liner en alliage d'aluminium renforcé par un enroulement filamentaire de fibres de carbone liées par de la résine époxy.

Une extrémité arrondie 12 du réservoir 1 comprend un orifice d'entre/sortie pour le fluide et dans lequel est monté un organe 2 de contrôle du remplissage et/ou de soutirage du gaz 2. En position montée sur le réservoir 1, une première portion de l'organe 2 de contrôle est située à l'intérieur du volume du réservoir 1 et une seconde-portion fait saillie à l'extérieur du réservoir 1. L'organe 2 de contrôle comporte dans sa portion extérieure une interface de connexion 3 destinée à coopérer en accrochage avec des pièces d'accrochage complémentaires portée par exemple par un appareil utilisateur, un circuit ou un dispositif de remplissage du réservoir 1.

L'organe 2 de contrôle comporte par ailleurs, dans sa partie située à l'extérieur du réservoir 1, un témoin d'état de la contenance 4 tel qu'une jauge de pression et un dispositif 5 d'échappement de gaz de sécurité décrit plus en détail ci-après.

L'extrémité extérieure de l'organe 2 de contrôle est pourvue d'un orifice central 31 apte à donner accès à l'intérieur du réservoir 1.

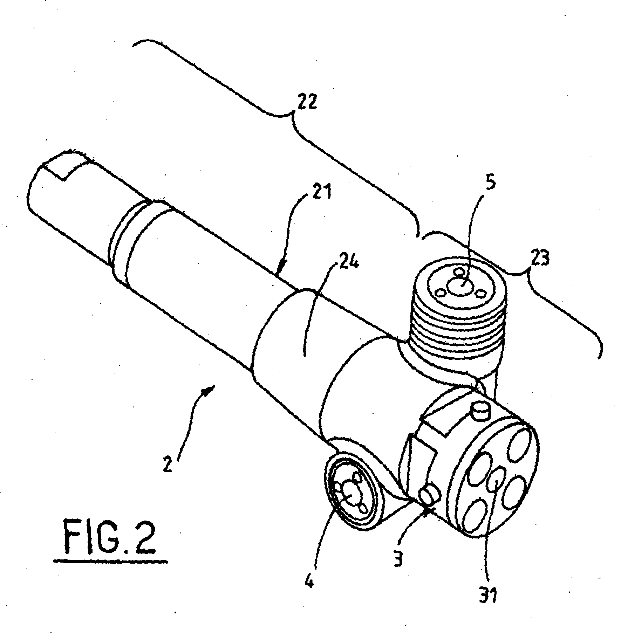

La figure 2 présente l'organe 2 de contrôle en dehors du réservoir 1 de stockage. Cet organe de contrôle 2 est composé d'un corps 21 oblong de forme générale cylindrique comprenant sensiblement dans sa partie médiane un raccord conique fileté 24 prévu pour la fixation étanche dudit organe 2 dans l'orifice du réservoir 1 de stockage.

En position montée sur un réservoir 1, une première partie 22 du volume de l'organe de contrôle se trouve ainsi à l'intérieur du réservoir 1 tandis qu'une seconde partie 23 du volume de l'organe 2 se trouve à l'extérieur du réservoir 1 offrant ainsi l'accès à l'interface de connexion 3, au témoin d'état de la contenance 4, au dispositif de sécurité 5 et à l'orifice central 31 permettant le remplissage et/ou le soutirage du gaz.

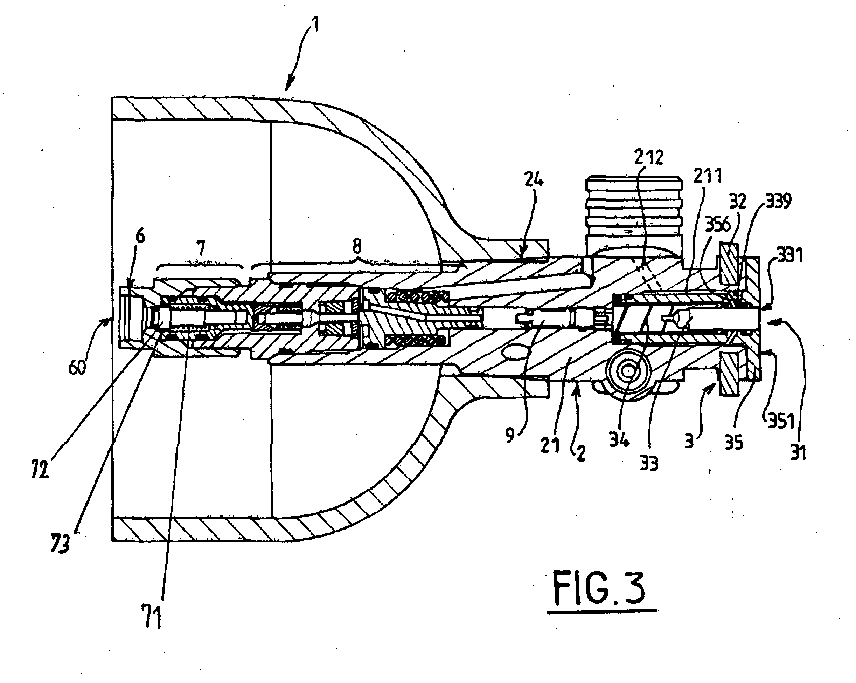

En se référant à la figure 3, le corps 21 de l'organe de contrôle 2 est lié mécaniquement au réservoir 1 grâce au filetage conique 24 coopérant avec un taraudage formé dans le col du réservoir 1. L'étanchéité entre l'organe 2 et le réservoir 1 peut être maintenu par exemple au moyen notamment d'un ruban téflon apposé sur les filets.

L'organe 2 de contrôle intègre dans son volume, sensiblement au niveau de sa première extrémité, d'amont en aval : un organe de filtration du gaz soutiré 6, un clapet de pression résiduelle 7 maintenant en permanence une pression minimum (par exemple environ 3 bars) de gaz dans le réservoir 1 afin d'éviter sa pollution, un organe de pré-détente 8 permettant la sortie du gaz à une pression déterminée proche de la pression nécessaire à l'application, ainsi qu'une valve d'isolement 9 permettant d'autoriser ou d'interrompre le soutirage du gaz. Comme représenté à la figure 3, une partie de l'organe de pré-détente 8 peut faire saillie de la première extrémité du corps 21 de l'organe 2 de contrôle, le clapet de pression résiduelle 7 et l'organe de filtration du gaz soutiré 6 étant montés sur cette partie en saillie de l'organe de pré-détente 8.

L'interface de connexion 3 est matérialisée par quatre goupilles protubérantes 32 (ou baïonnettes) permettant l'accrochage de raccords à empreintes complémentaires pour effectuer le remplissage et le soutirage du gaz contenu dans le réservoir 1. L'orifice central 31 de l'organe 2 de contrôle du remplissage et/ou le soutirage du gaz peut être protégé contre les particules extérieures grâce à un obturateur mobile 33. L'obturateur mobile 33 a par exemple, la forme d'un axe qui est soumis à l'action d'un ressort 34 de rappel vers une position de fermeture ou de repos de l'orifice 31 dans laquelle la surface 331 d'extrémité dudit obturateur 33 coïncide avec la surface frontale 351 d'une canule 35 de l'interface de connexion 3. La canule 35 est logée en partie dans le corps 21 de l'organe 2 de contrôle.

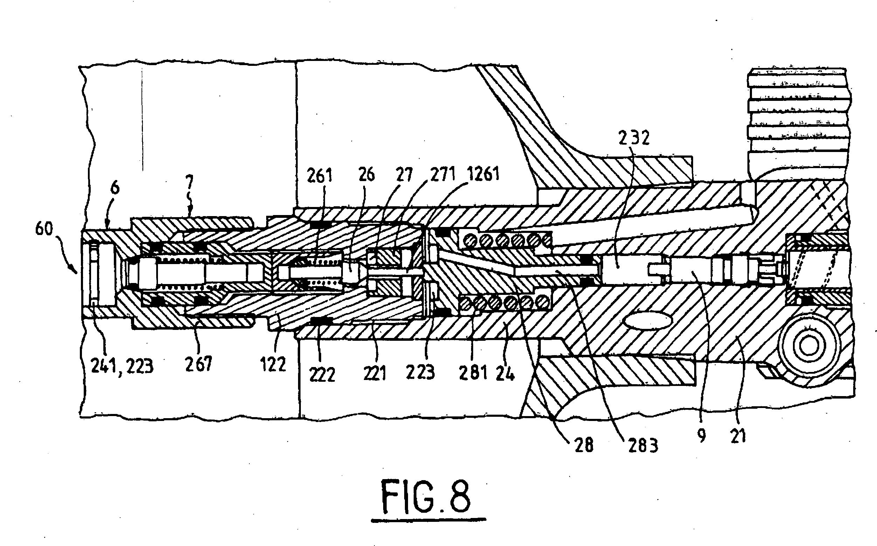

Comme représenté de façon agrandie à la figure 8, l'organe de pré-détente 8 peut être compris dans une cartouche de pré-détente 122 vissée dans le corps 24 de l'organe 2 de contrôle via un système de filetage/taraudage 221.

En amont de l'organe de pré-détente 8, l'organe 2 de contrôle comporte un filtre 6 puis un clapet de pression résiduelle 7 connu en soi. Un tel clapet de pression résiduelle fonctionne schématiquement de la façon suivante : le ressort 71 agit sur le clapet 72 et tend à étancher naturellement le clapet de pression résiduelle 72 sur son siège 73. Tant que l'effort de la pression de gaz sur la section du clapet 72 est supérieure à celle de l'effort du ressort 71, le clapet est passant. Le clapet de pression résiduelle 72 ferme le circuit lorsque l'effort de la pression de gaz sur la section dudit clapet 72 est insuffisante à vaincre l'effort du ressort 71. Ce niveau de pression (supérieure à la pression atmosphérique, par exemple de l'ordre de 3 bars) est celui qui subsistera à l'intérieur du réservoir en fin de phase d'utilisation afin d'éviter les diverses pollutions. Ce clapet de pression résiduelle 7 est par exemple passant uniquement dans le sens de la sortie de gaz vers l'extérieur (en direction de l'orifice 31) et que lorsque la pression du gaz est supérieure à un seuil permettant l'ouverture de ce clapet 7 (par exemple 3 bar). Le filtre 6 et le clapet 7 de pression résiduelle sont par exemple logés dans un boîtier 267 vissé sur l'extrémité amont de la cartouche de pré-détente 1.22.

En aval de l'organe de pré-détente 8, (vers la sortie 31), l'organe 2 de contrôle comprend une chambre basse pression 223. L'étanchéité entre l'intérieur du réservoir 1 et la chambre basse pression 223 est assurée par exemple par l'association 222 d'un joint torique et de bagues anti-extrusion disposés entre la cartouche 122 et le corps 24 de l'organe de contrôle 2. Le filtre 6 est maintenu dans la cartouche 22 par exemple au moyen d'une bague élastique 241 logée dans une gorge 223 formée dans le boîtier 267.

Le clapet 26 de l'organe de pré-détente 8 est soumis à l'action d'un ressort 261 vers un siège 27 maintenu dans la cartouche 122 sous l'action d'un porte-siège fileté 271. Le clapet 26 est soumis à l'effort du ressort de clapet 261 et à l'effort du gaz sous pression.

L'extrémité aval du clapet 26 est munie d'une tige 1261 dont l'extrémité est en contact-avec un piston-de pré-détente 28. Ce piston 28 est soumis quant à lui à une contrainte de la part d'un ressort 281 en direction du clapet 26 de pré-détente. Du fait de l'effort du ressort 281 et de l'action du gaz sur la section aval du piston 28, le clapet 26 assure un rôle de régulation de pression.

Lors des phases de soutirage de gaz à partir du réservoir 1, le gaz contenu dans le réservoir 1 sous haute pression transite via le filtre 6, puis se détend dans la cartouche 122 vers la chambre basse pression 223.

Le gaz détendu traverse ensuite le piston 28 par un perçage 283 formé dans le corps du piston 26, pour déboucher dans une chambre 232 située en amont de la valve d'isolement 9. La valve d'isolement 9 assure une étanchéité entre le corps 21 et l'intérieur du réservoir 1 par des systèmes de joint ou analogue.

La valve 9 d'isolement est par défaut fermée. La valve 9 d'isolement est par exemple une valve de type classique, telle qu'une valve comportant un corps tubulaire fixe et une broche mobile à l'intérieur du corps apte à rendre la valve passante ou non suivant la position de la broche.

La valve 9 est susceptible d'être actionnée via un pousse-valve appartenant par exemple à un système utilisateur de l'ensemble de stockage ou à une tête de distribution du gaz.

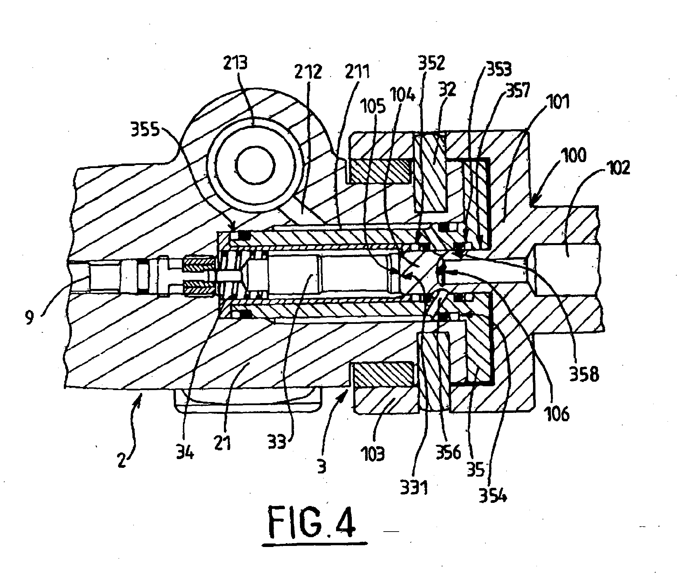

Suivant le mode de- réalisation de la figure 4, l'extrémité d'une prise de conditionnement 100 est accouplée à l'extrémité dite extérieure de l'organe 2 de contrôle. Plus précisément, la prise de conditionnement 100 présente un corps 101 et une interface de connexion comportant des empreintes 103 pouvant coopérer avec les goupilles protubérantes 32 de l'interface de connexion 3 de l'organe 2 de contrôle.

L'interface de connexion de la prise de conditionnement 100 comprend un axe ou about 104 dimensionné pour venir se loger dans le puits 357 central de la canule 35. Ainsi, lorsque l'interface de connexion de la prise de conditionnement 100 est engagée et coopère avec l'interface de connexion 3 de l'organe 2, l'axe 104 vient se loger coaxialement dans le puits 357 de la canule 35. De plus, l'extrémité 105 de l'axe 104 de la prise de conditionnement 100 vient en contact avec la surface 331 aval de l'obturateur 33, repoussant ce dernier en combattant l'effort du ressort 34.

Lorsque l'interface de connexion de la prise de conditionnement 100 est en position finale sur l'interface de connexion 3 de l'organe 2, la surface périphérique extérieure avant de l'axe 104 est au contact d'un premier dispositif d'étanchéité 352 comprenant, par exemple, un joint et une bague anti-extrusion tandis qu'une portion extérieure arrière de l'axe 104 est au contact d'un second dispositif d'étanchéité comprenant un joint et une bague anti-extrusion 353. Entre ces deux portions, la surface périphérique de l'axe forme une chambre annulaire étanche 358 (étranglement local de l'axe 104 par exemple) entre l'axe 104 et la canule 35 de l'organe 2 de contrôle.

Au cours d'une opération de conditionnement du réservoir 1, le fluide de remplissage est drainé au travers de la prise de conditionnement 100 via un conduit 102 central qui débouche dans la chambre annulaire 358. Par exemple, le conduit 102 central qui débouche dans la chambre annulaire 358 par l'intermédiaire d'orifices radiaux 106 formés au travers de la partie médiane de l'axe 104.

Le fluide de remplissage traverse ensuite la canule 35 via des trous ou conduits 356 pour arriver dans une chambre annulaire 211 formée entre le corps 21 et la canule 35. L'étanchéité de la chambre 211 est assurée via, par exemple, deux ensembles-d'étanchéité 354, 355 comprenant chacun par exemple un joint et une bague anti-extrusion. La chambre annulaire 211 draine ensuite le fluide de remplissage vers un perçage 212 qui débouche dans une chambre annulaire 213 du dispositif de sécurité 5.

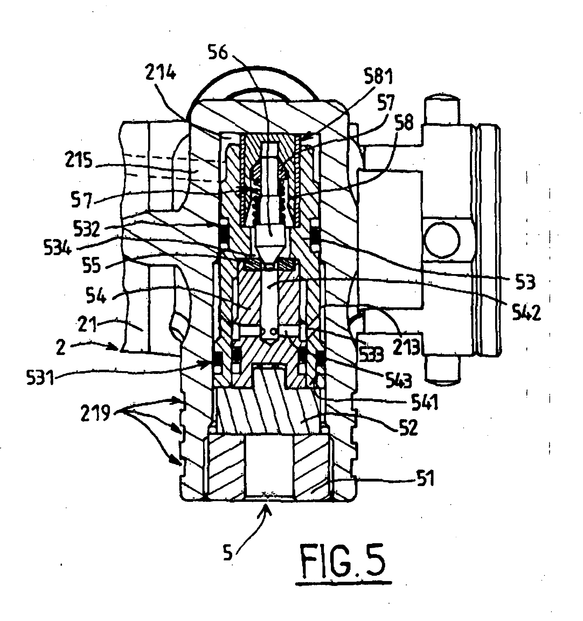

La figure 5 représente plus en détail le dispositif de sécurité 5 logé dans le corps de l'organe 2 de contrôle du remplissage et/ou du soutirage. Comme représenté, le dispositif de sécurité 5 peut être contenu dans un volume faisant saillie transversalement du corps oblong de l'organe 2 de contrôle.

Le dispositif 5 de sécurité comporte un corps de cartouche 53 ou cadre qui enferme un clapet 56. Le clapet 56 est naturellement maintenu en position d'obturation étanche du passage de fluide contre un siège 55 sous l'action d'un ressort 57. Le siège 55, de préférence non-métallique, est centré et maintenu de façon étanche relativement au corps au moyen d'un porte siège 54 par exemple vissé dans le corps de cartouche 53.

Un bouchon 51 ayant une entretoise- fusible 52 (telle qu'un alliage eutectique à bas point de fusion par exemple bismuth - indium) enferme la cartouche 53 dans un puits du corps 21 de l'organe 2. Le bouchon 51 est par exemple vissé dans l'extrémité du puits du corps 21 de l'organe 2 de contrôle.

Pour assurer transfert de chaleur particulièrement efficace entre le milieu ambiant et l'entretoise fusible 52, le bouchon 51 a de préférence une conductivité thermique élevée, il est par exemple constitué d'un alliage de cuivre. Par ailleurs, des gorges 219 peuvent être ménagées dans le corps 21 pour augmenter la surface d'échange avec le milieu ambiant dans la zone où se trouve le fusible 52.

Le fluide de remplissage entrant dans la chambre annulaire 213, étanche entre la cartouche 53 et le corps 21 (joints et bagues anti-extrusion 531 et 532), traverse successivement la cartouche 53 via des premiers orifices latéraux 533 puis traverse le porte-siège 54 via de seconds perçages 543. Le fluide emprunte ensuite le conduit central 542 du porte-siège 54 qui débouche au niveau du clapet 56.

Le clapet 56 s'ouvre sous l'effort d'une pression du fluide de remplissage déterminée (supérieure à une pression seuil définie pour éviter une pollution du contenu du réservoir 1). L'ouverture du clapet 56 permet au fluide de passer dans une chambre intermédiaire 534.

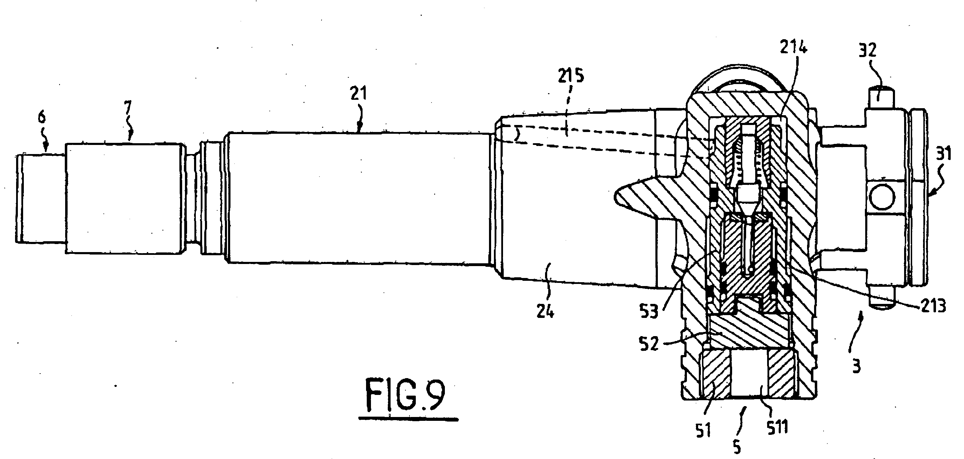

Des fraisures 581 d'une entretoise 58 drainent ensuite le fluide jusque dans une chambre aval 214. Un perçage 215 communiquant d'une part avec la chambre aval 214 et d'autre part avec l'intérieur du réservoir 1 permet le transport du fluide à l'intérieur du réservoir. La figure 9 illustre schématiquement le perçage 215 qui débouche au niveau d'un épaulement délimitant l'extrémité de la portion de montage 24 filetée du corps 21 (le perçage 215 débouche au niveau d'une portion située dans le réservoir 1 lorsque l'organe 2 de contrôle est en position montée).

Lorsque l'opération de conditionnement est achevée et le circuit de remplissage éventuellement purgé, le clapet 56 retrouve automatiquement sa position de fermeture étanche sur son siège 55 sous l'action de son ressort et isole l'intérieur du réservoir 1. La prise de conditionnement peut être retirée, l'obturateur mobile 33 de l'interface de connexion 3 retrouve alors automatiquement sa position de repos sous l'action du ressort 34.

A la figue 6, l'organe 2 de contrôle du remplissage et/ou de soutirage du gaz est connecté à un raccord de sortie 900 composé d'un corps 901 ayant une interface de connexion comportant des empreintes 903 coopérant avec les goupilles protubérantes 32 de l'interface de connexion 3.

Lorsque l'interface de connexion du raccord de sortie 900 est engagée et coopère avec l'interface de connexion 3 de l'organe 2 de contrôle, l'axe 904 du raccord de sortie 900 vient se loger coaxialement dans le puits 357 de la canule 35. L'extrémité 905 de l'axe 904 du raccord de sortie 900 vient en contact avec la surface 331 de l'obturateur 33. L'axe 904 repousse l'obturateur 33 en combattant l'effort du ressort 34 jusqu'à ouvrir la valve d'isolement 9 par le contact de la tige 332 de l'obturateur 33 sur l'axe de la valve 9.

Lorsque l'interface de connexion du raccord de sortie 900 est en position finale sur l'interface de connexion 3 de l'organe 2, la surface périphérique extérieure arrière de l'axe 904 est au contact de l'ensemble d'étanchéité aval 353 comprenant un joint et une bague anti-extrusion. De cette façon, l'axe 904 est logé de manière étanche dans la canule 35 vis-à-vis de l'extérieur.

Le fluide soutiré du réservoir 1, après être passé dans l'organe de filtration 6, puis dans le clapet de pression résiduelle 7 et dans l'organe de pré-détente 8, traverse-la valve d'isolement 9. Le fluide arrive ensuite dans la chambre 358 contenant l'obturateur 33 puis empreinte le fraisage 908 pour arriver dans le conduit 902 central du raccord de sortie 900 (au travers de l'axe 904 pour être distribué vers l'extérieur dans un réseau vers un utilisateur).

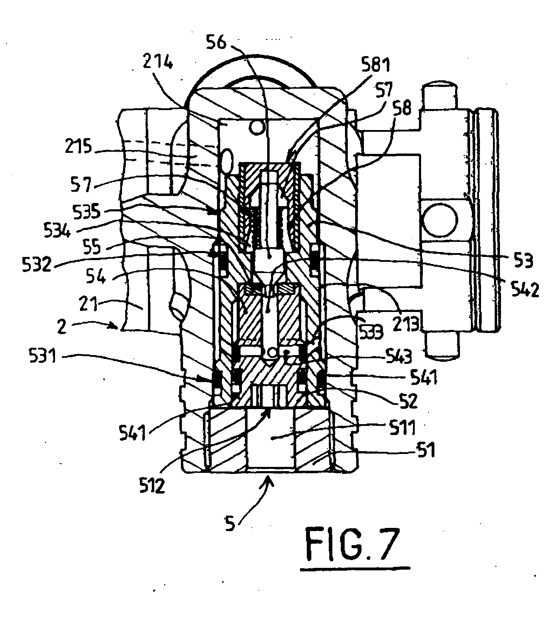

Comme représenté à la figure 7, une surchauffe (due par exemple à un incendie) active l'organe de sécurité 5 en provoquant une fusion du fusible 52 qui s'évacue par exemple par un orifice 511 du bouchon 51. L'effort de la haute pression du fluide contenu dans le réservoir 1 qui s'applique sur la section de la cartouche 53 permet alors de déplacer la cartouche 53 jusqu'à venir en butée sur la surface 512 du bouchon 51.

La cartouche vient se placer dans une portion du puits du corps 21 dans laquelle les éléments d'étanchéité ne coopèrent plus contre le corps 21. C'est-à-dire que l'association 532 d'un joint et bagues anti-extrusion perd alors son étanchéité et met en communication la chambre 214 avec la chambre annulaire 213. De cette façon, le canal d'échappement est ouvert pour le fluide sous haute pression venant de l'intérieur du réservoir via l'orifice 215. Depuis la chambre annulaire 213, le fluide est évacué vers l'extérieur par le perçage 212.

L'évacuation du gaz peut s'effectuer différemment suivant que le réservoir 1 est relié ou non un circuit utilisateur.

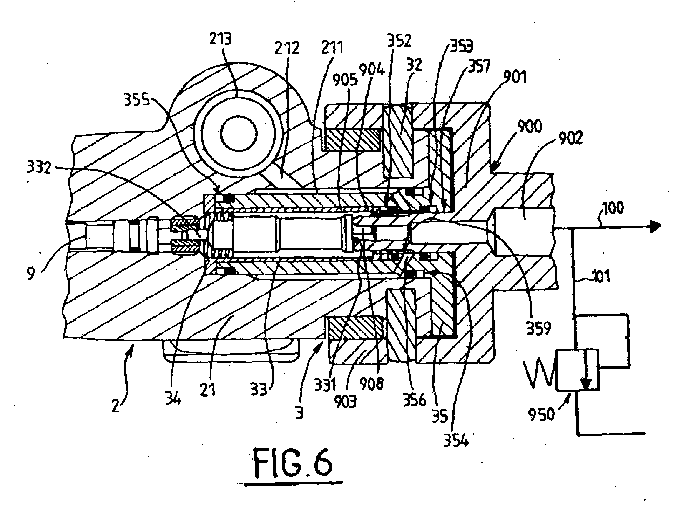

Si le réservoir 1 est connecté à son raccord de sortie 900 par son organe 2 de contrôle (cf. figure 6), le fluide traversant le perçage 212 arrive dans la chambre annulaire 211 du corps puis traverse les perçages 356 de la canule 35 pour se retrouver dans la chambre annulaire 359 formée entre l'axe 904 et la canule 35. Cette chambre 359 formée entre l'axe 904 et la canule 35 communique avec la chambre 358 amont contenant l'obturateur 33. Cette communication est rendue possible par la géométrie de l'extrémité de l'axe 904 (diamètre notamment) assurant un jeu entre l'axe 904 et le système 352 d'étanchéité (joint et bague anti-extrusion).

A partir de la chambre 358, le fluide est évacué vers le conduit 902 central du raccord de sortie 900 via le fraisage 908 usiné dans l'axe 904. Le conduit 902 débouche sur un réseau de l'application comportant par exemple une conduite principale 100 et une conduite auxiliaire 101 de sécurité reliée à la conduite principale 100. La conduite auxiliaire 101 comprend un mécanisme 950 formant -une soupape de sécurité haute pression apte à évacuer le gaz sous pression vers l'atmosphère dans une zone déterminée lorsque la pression du gaz excède une valeur limite.

Ainsi, le fluide haute pression qui s'échappe du réservoir en cas de surchauffe est évacué par la soupape de sécurité 950 qui, grâce à une cheminée d'évacuation ou analogue, conduit le fluide à l'atmosphère dans une zone connue et maîtrisée par exemple d'un véhicule.

Si en revanche le réservoir 1 plein n'est pas connecté, par exemple s'il est au repos dans une phase de stockage (cf. figure 3), le fluide provenant du réservoir traversant le perçage 212 arrive dans la chambre annulaire 211 puis traverse les perçages 356 de la canule 35 pour se retrouver dans la chambre annulaire 339.

Le jeu prévu entre l'obturateur 33 et la canule 35 permet alors l'évacuation du fluide haute pression drainé vers l'atmosphère via l'orifice 31. Le système de contrôle et du remplissage et/ou du soutirage de gaz selon l'invention permet ainsi.
- au fluide d'accéder, via le circuit de remplissage, à l'intérieur d'un récipient lors des phases de conditionnement du récipient et ceci lorsque la pression de remplissage est supérieure à une pression seuil définie pour éviter la pollution du contenant et du contenu,
- au fluide contenu sous haute pression dans le récipient d'être isolé de l'air ambiant (fonction anti-retour du clapet 56 notamment),
- en cas d'élévation de température due par exemple à un incendie, au fluide contenu sous haute pression dans le récipient d'être évacué hors du récipient.

L'évacuation ou échappement de sécurité peut s'opérer :
- via l'orifice 31 de l'interface de connexion lorsque le récipient n'est pas connecté (par exemple transporté ou stocké lors des phases de logistiques),
- via le circuit de sécurité d'un réseau d'alimentation lorsque le récipient est connecté (par exemple un réseau d'une pile à combustible ou d'un véhicule).

La sortie du gaz d'échappement (en cas de surpression) intervient via l'orifice (de préférence unique) qui sert également au remplissage et au soutirage. Ainsi, le gaz utilise un même orifice pour le remplissage/soutirage/échappement en cas de surpression. Ceci permet une connexion unique au réservoir et simplifie donc les opérations pour un utilisateur. Le gaz évacué en cas de surpression dans le réservoir peut ainsi être recueilli par cet orifice vers un circuit utilisateur, vers une zone sécurisée. Cette caractéristique est particulièrement avantageuse lorsque le gaz est à risque tel que l'hydrogène.

Bien entendu, l'invention n'est pas limitée à l'exemple de réalisation décrit ci-dessus. Ainsi, par exemple, le dispositif de sécurité pourrait comporter une soupape de décharge haute pression apte à évacuer le fluide vers l'extérieur lorsque la pression à l'intérieur du récipient 1 excède une valeur déterminée supérieure à un seuil, le seuil étant supérieur à la pression de stockage.

Avantageusement, la fonction de soupape de décharge haute pression peut être réalisée par l'entretoise fusible 52 de l'organe de sécurité 5. Par exemple, l'entretoise fusible 52 pourrait être constituée d'un ressort apte à transformer le dispositif de sécurité en soupape de décharge haute pression en permettant le déplacement du bouchon 53 (ou cartouche) sous certaines-conditions de pression. Dans ce cas, l'effort fournit par le ressort sur la cartouche 53 doit être supérieur à l'effort provoqué par la pression du fluide de remplissage.

En variante, également un ressort pourrait être intercalé entre l'entretoise fusible 52 et la cartouche 53 du dispositif de sécurité 5 de manière à ce que ledit dispositif de sécurité 5 évacue le fluide contenu dans le réservoir en cas d'une élévation de la température ambiante et/ou en cas d'une surpression du fluide contenu dans le réservoir.

En variante l'obturateur 33 peut être réalisé dans une matière fusible (alliage eutectique à bas point de fusion par exemple -bismuth - indium) de manière à fondre en même temps en cas de surchauffe et ainsi permettre un passage plus important du gaz au niveau de l'orifice central 31.

De plus, le fusible thermique peut être remplacé par tout autre élément de sécurité, par exemple : un disque de rupture, une soupape de décharge, une vanne commandée en fonction d'une température et/ou d'une pression mesurée(s).

L'invention peut ainsi être utilisée dans toutes les applications demandant une grande facilité d'emploi, un bon compromis légèreté, encombrement et capacité (autonomie). A. titre d'exemple non limitatif, l'invention peut s'appliquer à l'hydrogène gazeux pour pile à combustible portable ou mobile, aux gaz médicaux, aux gaz pour analyses et laboratoires.

## Revendications

1. Organe de contrôle du remplissage et/ou du soutirage d'un gaz sous pression destiné à être monté dans un orifice d'un réservoir (1), comprenant un corps (21) pourvu d'au moins un dispositif (8) de contrôle de la circulation du gaz disposé entre une première extrémité comprenant un orifice (31) formant une entrée et/ou une sortie pour le gaz vis-à-vis du réservoir et une seconde extrémité destinée à communiquer avec l'intérieur du réservoir, l'organe de contrôle comprenant en outre un dispositif (5) d'échappement de gaz de sécurité pour évacuer le gaz hors du réservoir en cas de situation à risque et comprenant un canal ou circuit d'échappement de gaz (215, 213, 212, 211, 31) s'étendant entre une première extrémité (215) destinée à communiquer avec le gaz sous pression du réservoir et une seconde extrémité (31) destinée à communiquer avec un circuit utilisateur ou avec l'atmosphère, le circuit d'échappement étant obturé ou non en fonction de l'état d'un élément de sécurité (52), **caractérisé en ce que** la seconde extrémité du circuit d'échappement (215, 213, 212, 211, 31) de gaz coïncide avec l'orifice (31) de l'organe de contrôle formant une entrée et/ou une sortie pour le gaz.

2. Organe selon la revendication 1, **caractérisé en ce que** la seconde extrémité du circuit d'échappement (215, 213, 212, 211, 31) de gaz coïncide avec un orifice (31) d'entré/sortie de l'organe de contrôle destiné aussi bien à l'entrée (remplissage) qu'à la sortie de gaz (soutirage).

3. Organe selon la revendication 1 ou 2, **caractérisé en ce qu'**il comporte une portion de détente abritant un dispositif de pré-détente (8), l'organe (2) de contrôle comportant en outre une portion de montage (24) destinée à être montée dans l'orifice d'un réservoir, la portion de détente et la portion de montage étant disposées relativement sur le corps (21) de façon à disposer la portion de détente au moins partiellement à l'intérieur du volume d'un réservoir (1) lorsque l'organe (2) est en position montée.

4. Organe selon l'une quelconque des revendications 1 à 3, **caractérisé en ce que** le dispositif (5) de sécurité comprend un élément (53) d'obturation apte à être déplacé entre une position d'obturation et une position de non-obstruction du circuit d'échappement de gaz, l'élément de sécurité (52) formant une butée escamotable de maintien de l'élément (53) d'obturation en position d'obturation.

5. Organe selon l'une quelconque des revendications précédentes, **caractérisé en ce qu'**il comporte un canal ou circuit de remplissage pour le gaz sous pression s'étendant entre une première extrémité (31) destinée à être reliée à une source de gaz de remplissage sous pression et une seconde extrémité (215) destinée à communiquer avec un réservoir, un dispositif à clapet (56) de remplissage étant disposé sur le circuit de remplissage, le clapet (56) de remplissage étant dimensionné pour s'ouvrir uniquement au-delà d'une pression seuil, pour autoriser la circulation de gaz sous pression entre les deux extrémités (31, 215) du circuit de remplissage uniquement dans le sens d'un remplissage et lorsque la pression du gaz de remplissage excède ledit seuil.

6. Organe selon les revendications 4 et 5, **caractérisé en ce que** le clapet (56) de remplissage est mobile relativement à un siège (55) solidaire d'un cadre (53), l'élément (53) d'obturation du canal d'échappement comportant ledit cadre.

7. Organe selon la revendication 5 ou 6, **caractérisé en ce que** les circuits de remplissage et d'échappement comportent au moins une portion commune.

8. Organe selon l'une quelconque des revendications précédentes, **caractérisé en ce qu'**il comporte un circuit de soutirage de gaz s'étendant entre une première extrémité (60) destinée à être reliée en position montée avec l'intérieur du réservoir et une seconde extrémité (31) destinée à être reliée à un circuit utilisateur du gaz soutiré du réservoir.

9. Organe selon la revendication 8, **caractérisé en ce qu'**il comporte, disposé dans le circuit de soutirage et en plus d'un dispositif de pré-détente (8), au moins l'un des éléments de contrôle parmi : un élément filtrant le gaz (6), un dispositif formant clapet de pression résiduelle (7), une valve d'isolement (9).

10. Organe selon l'une quelconque des revendications 8 ou 9, **caractérisé en ce que** le circuit de soutirage est sensiblement rectiligne entre ses deux extrémités.

11. Organe selon l'une quelconque des revendications précédentes, **caractérisé en ce qu'**il comprend une soupape de décharge haute pression ayant une première extrémité destinée à être reliée avec le gaz sous pression en position montée-et une seconde extrémité reliée à une sortie pour évacuer du fluide lorsque la pression excède une valeur déterminée supérieure à un seuil.

12. Organe selon l'une quelconque des revendications précédentes, **caractérisé en ce que** l'élément de sécurité (52) comprend l'un au moins des éléments de sécurité parmi : un fusible thermique, un disque de rupture, une soupape de décharge, une vanne commandée en fonction d'une pression et/ou d'une température mesurée.

13. Récipient de gaz sous pression comportant un orifice **caractérisé en ce qu'**il comporte un organe (2) de contrôle du remplissage et/ou du soutirage conforme à l'une quelconque des revendications 1 à 12 disposé dans son orifice.

14. Circuit d'utilisation d'un gaz sous pression, **caractérisé en ce qu'**il comporte un récipient selon la revendication 13 raccordé au circuit d'utilisation via l'organe de contrôle, le circuit étant reliée à l'orifice (31) d'entrée/sortie de l'organe de contrôle (2), le circuit comportant un mécanisme (950) formant une soupape de sécurité haute pression apte à évacuer le gaz sous pression d'échappement vers l'atmosphère ou dans une zone sécurisée déterminée.

15. Circuit d'utilisation selon la revendication 14, **caractérisé en ce qu'**il comporte une conduite principale (100) reliée à un utilisateur du gaz et une conduite auxiliaire (101) de sécurité reliée à la conduite principale (100), le mécanisme (950) formant une soupape de sécurité haute pression étant située dans la conduite principale et/ou dans la conduite auxiliaire (101).

## Claims

1. Member for controlling filling and/or drawing of a pressurized gas that is intended to be mounted in an orifice of a tank (1), comprising a body (21) provided with at least one gas flow control device (8) arranged between a first end, comprising an orifice (31) forming an inlet and/or an outlet for the gas with respect to the tank, and a second end intended to communicate with the inside of the tank, the control member additionally comprising a gas escape safety device (5) for evacuating the gas from the tank in the event of a risk situation and comprising a gas escape channel or circuit (215, 213, 212, 211, 31) extending between a first end (215), intended to communicate with the pressurized gas of the tank, and a second end (31) intended to communicate with a user circuit or with the atmosphere, the escape circuit being either shut off or not depending on the state of a safety element (52), **characterized in that** the second end of the gas escape circuit (215, 213, 212, 211, 31) coincides with the control member orifice (31) forming an inlet and/or an outlet for the gas.

2. Member according to Claim 1, **characterized in that** the second end of the gas escape circuit (215, 213, 212, 211, 31) coincides with a control member inlet/outlet orifice (31) intended both to let gas in (filling) and to let gas out (drawing).

3. Member according to Claim 1 or 2, **characterized in that** it comprises an expansion portion accommodating a pre-expansion device (8), the control member (2) additionally comprising a mounting portion (24) intended to be mounted in the orifice of a tank, the expansion portion and the mounting portion being arranged relatively on the body (21) in such a way as to arrange the expansion portion at least partially inside the volume of a tank (1) when the member (2) is in the mounted position.

4. Member according to any one of Claims 1 to 3, **characterized in that** the safety device (5) comprises a shut-off element (53) capable of being moved between a position in which it shuts off the gas escape circuit and a position in which is does not obstruct this circuit, the safety element (52) forming a retractable stop for retaining the shut-off element (53) in the shut-off position.

5. Member according to any one of the preceding claims, **characterized in that** it comprises a filling channel or circuit for the pressurized gas that extends between a first end (31), intended to be connected to a pressurized filling gas source, and a second end (215) intended to communicate with a tank, a filling valve device (56) being arranged on the filling circuit, the filling valve (56) being dimensioned to open only above a threshold pressure so as to allow pressurized gas to flow between the two ends (31, 215) of the filling circuit only in a filling direction and when the pressure of the filling gas exceeds said threshold.

6. Member according to Claims 4 and 5, **characterized in that** the filling valve (56) is able to move relative to a seat (55) secured to a frame (53), the element (53) for shutting off the escape channel comprising said frame.

7. Element according to Claim 5 or 6, **characterized in that** the filling and escape circuits comprise at least one common portion.

8. Member according to any one of the preceding claims, **characterized in that** it comprises a gas drawing circuit extending between a first end (60), intended to be connected in the mounted position with the inside of the tank, and a second end (31) intended to be connected to a user circuit which uses the gas drawn from the tank.

9. Member according to Claim 8, **characterized in that** it comprises, arranged in the drawing circuit and in addition to a pre-expansion device (8), at least one of the control elements from the following group: a gas filtering element (6), a device forming a residual pressure valve (7), and an isolating valve (9).

10. Member according to any one of Claims 8 to 9, **characterized in that** the drawing circuit is substantially rectilinear between its two ends.

11. Member according to any one of the preceding claims, **characterized in that** it comprises a high-pressure discharge valve having a first end, intended to be connected with the pressurized gas in the mounted position, and a second end connected to an outlet for evacuating fluid when the pressure exceeds a defined value above a threshold.

12. Member according to any one of the preceding claims, **characterized in that** the safety element (52) comprises at least one of the safety elements from the following group: a thermal fuse, a rupture disk, a discharge valve, and a valve controlled as a function of a measured pressure and/or temperature.

13. Pressurized gas container comprising an orifice, **characterized in that** it comprises a filling and/or drawing control member (2) as set forth in any one of Claims 1 to 12, arranged in its orifice.

14. Pressurized gas use circuit, **characterized in that** it comprises a container according to Claim 13 connected to the use circuit via the control member, the circuit being connected to the inlet/outlet orifice (31) of the control member (2), the circuit comprising a mechanism (950) forming a high-pressure safety valve capable of evacuating the pressurized escape gas toward the atmosphere or into a defined safeguarded region.

15. Use circuit according to Claim 14, **characterized in that** it comprises a main line (100) connected to a gas user and an auxiliary safety line (101) connected to the main line (100), the mechanism (950) forming a high-pressure safety valve being situated in the main line and/or in the auxiliary line (101).

## Patentansprüche

1. Organ zur Kontrolle des Befüllens mit einem und/oder der Entnahme von einem Druckgas, das dazu bestimmt ist, in eine Öffnung eines Behälters (1) montiert zu werden, das einen Körper (21) enthält, der mit mindestens einer Vorrichtung (8) zur Kontrolle des Gasdurchflusses versehen ist, die zwischen einem ersten Ende, das eine Öffnung (31) enthält, die einen Eingang und/oder einen Ausgang für das Gas gegenüber dem Behälter bildet, und einem zweiten Ende angeordnet ist, das dazu bestimmt ist, mit dem Inneren des Behälters in Verbindung zu stehen, wobei das Kontrollorgan außerdem eine Sicherheits-Gasauslassvorrichtung (5) enthält, um das Gas im Fall einer Gefahrensituation aus dem Behälter abzuführen, und einen Gasauslasskanal oder - kreis (215, 213, 212, 211, 31) enthält, der sich zwischen einem ersten Ende (215), das dazu bestimmt ist, mit dem Druckgas des Behälters in Verbindung zu stehen, und einem zweiten Ende (31) erstreckt, das dazu bestimmt ist, mit einem Verbraucherkreis oder mit der Atmosphäre in Verbindung zu stehen, wobei der Auslasskreis in Abhängigkeit vom Zustand eines Sicherheitselements (52) verschlossen ist oder nicht, **dadurch gekennzeichnet, dass** das zweite Ende des Gasauslasskreises (215, 213, 212, 211, 31) mit der Öffnung (31) des Kontrollorgans zusammenfällt, die einen Eingang und/oder einen Ausgang für das Gas bildet.

2. Organ nach Anspruch 1, **dadurch gekennzeichnet, dass** das zweite Ende des Gasauslasskreises (215, 213, 212, 211, 31) mit einer Eingangs-/Ausgangsöffnung (31) des Kontrollorgans zusammenfällt, die sowohl für den Eintritt (Befüllen) als auch für den Austritt von Gas (Entnahme) bestimmt ist.

3. Organ nach Anspruch 1 oder 2, **dadurch gekennzeichnet, dass** es einen Expansionsabschnitt aufweist, der eine Vorexpansionsvorrichtung (8) aufnimmt, wobei das Kontrollorgan (2) außerdem einen Montageabschnitt (24) aufweist, der dazu bestimmt ist, in die Öffnung eines Behälters montiert zu werden, wobei der Expansionsabschnitt und der Montageabschnitt so auf dem Körper (21) angeordnet sind, dass der Expansionsabschnitt zumindest teilweise im Inneren des Volumens eines Behälters (1) angeordnet ist, wenn das Organ (2) in der montierten Stellung ist.

4. Organ nach einem der Ansprüche 1 bis 3, **dadurch gekennzeichnet, dass** die Sicherheitsvorrichtung (5) ein Verschlusselement (53) enthält, das zwischen einer Schließstellung und einer Stellung des Nicht-Versperrens des Gasauslasskreises verschoben werden kann, wobei das Sicherheitselement (52) einen einziehbaren Anschlag für den Halt des Verschlusselements (53) in der Schliei3stellung bildet.

5. Organ nach einem der vorhergehenden Ansprüche, **dadurch gekennzeichnet, dass** es einen Befüllungskanal oder -kreis für das Druckgas aufweist, der sich zwischen einem ersten Ende (31), das dazu bestimmt ist, mit einer Quelle von unter Druck stehendem Füllgas verbunden zu werden, und einem zweiten Ende (215) erstreckt, das dazu bestimmt ist, mit einem Behälter in Verbindung zu stehen, wobei eine Füllventilvorrichtung (56) auf dem Befüllungskreis angeordnet ist, wobei das Füllventil (56) bemessen ist, um sich nur jenseits eines Schwellendrucks zu öffnen, um das Strömen von Druckgas zwischen den zwei Enden (31, 215) des Befüllungskreises nur in Befüllungsrichtung, und wenn der Druck des Füllgases die Schwelle überschreitet, zu erlauben.

6. Organ nach den Ansprüche 4 und 5, **dadurch gekennzeichnet, dass** das Füllventil (56) bezüglich eines Sitzes (55) beweglich ist, der fest mit einem Rahmen (53) verbunden ist, wobei das Verschlusselement (53) des Auslasskanals den Rahmen aufweist.

7. Organ nach Anspruch 5 oder 6, **dadurch gekennzeichnet, dass** die Befüllungs- und Auslasskreise mindestens einen gemeinsamen Abschnitt aufweisen.

8. Organ nach einem der vorhergehenden Ansprüche, **dadurch gekennzeichnet, dass** es einen Gasentnahmekreis aufweist, der sich zwischen einem ersten Ende (60), das dazu bestimmt ist, in der montierten Stellung mit dem Inneren des Behälters verbunden zu sein, und einem zweiten Ende (31) erstreckt, das dazu bestimmt ist, mit einem Verbraucherkreis des aus dem Behälter entnommenen Gases verbunden zu sein.

9. Organ nach Anspruch 8, **dadurch gekennzeichnet, dass** es im Entnahmekreis angeordnet ist und zusätzlich zu einer Vorexpansionsvorrichtung (8) mindestens eines der folgenden Kontrollelemente aufweist: ein das Gas filterndes Element (6), eine ein Restdruckventil bildende Vorrichtung (7), ein Isolierventil (9).

10. Organ nach einem der Ansprüche 8 oder 9, **dadurch gekennzeichnet, dass** der Entnahmekreis zwischen seinen beiden Enden im Wesentlichen geradlinig ist.

11. Organ nach einem der vorhergehenden Ansprüche, **dadurch gekennzeichnet, dass** es ein Hochdruck-Entladungsventil enthält, das ein erstes Ende, das dazu bestimmt ist, in der montierten Stellung mit dem Druckgas verbunden zu sein, und ein zweites Ende hat, das mit einem Ausgang verbunden ist, um Fluid abzuführen, wenn der Druck einen bestimmten über einer Schwelle liegenden Wert übersteigt.

12. Organ nach einem der vorhergehenden Ansprüche, **dadurch gekennzeichnet, dass** das Sicherheitselement (52) mindestens eines der folgenden Sicherheitselemente enthält: eine Thermosicherung, eine Berstscheibe, ein Abführventil, ein in Abhängigkeit von einem gemessenen Druck und/oder von einer gemessenen Temperatur gesteuertes Ventil.

13. Druckgasbehälter, der eine Öffnung aufweist, **dadurch gekennzeichnet, dass** er ein Organ (2) zur Kontrolle des Befüllens und/oder der Entnahme nach einem der Ansprüche 1 bis 12 aufweist, das in seiner Öffnung angeordnet ist.

14. Verbrauchskreis eines Druckgases, **dadurch gekennzeichnet, dass** er einen Behälter nach Anspruch 13 aufweist, der an den Verbrauchskreis über das Kontrollorgan angeschlossen ist, wobei der Kreis mit der Eingangs-/Ausgangsöffnung (31) des Kontrollorgans (2) verbunden ist, wobei der Kreis einen Mechanismus (950) aufweist, der ein Hochdruck-Sicherheitsventil bildet, das das Auslassdruckgas in die Atmosphäre oder in eine bestimmte gesicherte Zone abführen kann.

15. Verbrauchskreis nach Anspruch 14, **dadurch gekennzeichnet, dass** er eine Hauptleitung (100), die mit einem Verbraucher des Gases verbunden ist, und eine Sicherheits-Hilfsleitung (101) aufweist, die mit der Hauptleitung (100) verbunden ist, wobei der Mechanismus (950) ein Hochdruck-Sicherheitsventil bildet, das in der Hauptleitung und/oder in der Hilfsleitung (101) angeordnet ist.
